# EUROPEAN PATENT APPLICATION

(11) **EP 4 108 907 A1**
(43) Date of publication of application: **28.12.2022**
(21) Application number: 21382549.0
(22) Date of filing: 22.06.2021
(51) Int. Cl.: F03B 13/06, F03B 15/00, H02J 3/32, F03B 3/10

(54) **SYSTEM AND METHOD FOR PRODUCING AND STORING HYDROELECTRIC POWER**

(71) Applicant: Iberdrola Generación, S.A., 48009 Bilbao Vizcaya (ES)
(72) Inventor: PERÁN MONTERO, Fernando, Bilbao (BIZKAIA) (ES); ROMERAL ROMERAL, José Manuel, Bilbao (BIZKAIA) (ES)
(74) Representative: Pons

(57) **Abstract**

A system for producing and storing hydroelectric power comprising one or more turbine units, being a Deriaz turbines, configured to be used in a turbine mode and a pump mode; a set of batteries connected to the turbine units, and a control unit connected to the set of batteries and the turbine units configured to start and to fine tune the turbine units by means of the set of batteries, and a method comprising the steps of setting one or more turbine units at a pump or turbine mode, regulating power by means of the batteries, in a lower amplitude set power band, fine regulation, and regulating power in a wide power set power band by varying the power of the turbine units.

## Description

### OBJECT OF THE INVENTION

The invention is referred to the field of electric power generation, in particular, the invention is related to a system and method for producing and storing hydroelectric power.

An object of the invention is a system for producing and storing electricity, in particular coming from a hydroelectric source. The system allows a quick response to variable requirements of power, being easy to implement in existing hydroelectric facilities, and reducing the stress and damage in hydraulic parts.

Another object of the invention is a method for producing and storing hydroelectric power which allows to combine a set of turbines and a set of batteries.

### BACKGROUND ART

Recently, there are many studies and developments directed to reduce greenhouse gas (GHG) emissions by increasing renewable energy consumption.

Nevertheless, a significant part of this renewable energy comes from intermittent renewables such as wind and solar energy. To accommodate the high level of intermittency, electricity systems will have to increase their storage capacity and become more flexible, so they can balance generation and consumption.

Therefore, the development of storage will become essential for balancing the energy system and its decarbonisation, as it will allow an active management and for a higher share of renewables while maintaining the stability and increasing the flexibility of energy system. In this context, hydropower energy turns up as a key technology to play this essential role within the energy system to provide daily flexibility and large storage capacity.

In this sense, one way to increase the storage capacity and introduce this flexibility into the grid is through reservoir hydropower and pumped hydro storage (PHS).

PHS is the most mature and cost-effective storage solution available today to provide large-scale storage that is needed for accommodating renewable electricity. This proven technology allows not only to produce electric energy, as hydropower plants do, but also to store it in the form of gravitational potential energy of the water.

Besides, PHS plants operate both in turbine and in pump mode for peaking regulation. By transferring water between two reservoirs at different elevations it is possible to supply electricity during peak demand (turbine mode) and to store excess electricity during periods of low demand (pumping mode).

This storage system enables electricity to be produced rapidly. The pump turbine can go from stop mode to full power in less than 2 minutes, providing a sound complement to a gas turbine which requires 15 minutes to reach its maximum output. Despite the large amount of capacity installed today, there is a huge potential for new expansion and development. Conventional PHS plants have several limitations, since they have limited storage capacity due to inefficient or inexistent peaking regulation of the turbine/pumping modes; usually regulate their power in fix mode, which is rigid and poorly efficient; also, the limited turbine electro-mechancial designs does not enable the pump operation mode; and any change in their infrastructure requires major civil works, meaning high resources and time dedication and potential negative environmental impacts.

The mandatory aim to reduce the GHG emissions in the following years, makes necessary other renewable energy sources, different than solar and wind, to deal with the periods when they do not provide energy. Hydropower technology has emerged as a highly valuable back-up due to its high level of flexibility. Above all, PHS technology is the most promising due to its capacity to refill the upper reservoir which increases the storage capacity and its maturity.

In this sense, the operational flexibility of PHS plants is essential to transform the technology into a key energy source as main back-up system for other intermittent renewable sources in order to match supply and demand.

PHS has long been the standard solution for peak shifting in Western Europe, where inexpensive nuclear power is used to supply base load demand and to pump water to the upper reservoir of PHS plants during periods of low demand.

Hydropower installations requires quick response times to switch from a partial load to a full load. Most of the pump turbines are required to start in less than two minutes. The most used turbines capable of dealing with this operation demand are the standard Francis turbines.

Standard Francis turbines work day after day at very low openings and consequently at low efficiency. The danger of disturbance from a very extensive distribution network makes immediate emergency power necessary.

A combination of Francis blades with variable pitch blades meets these criteria, the Deriaz turbine. The Deriaz pump-turbine demonstrates high efficiency over a wide range of partial load conditions, thanks to its combined governor setting which uses adjustable runner blades and guide vanes. The advantage of a Deriaz pump-turbine is merely mechanical and therefore a robust solution for PHES applications in remote areas as well.

However, this turbine is barely used currently as most of turbines in Europe, did not prioritize work at partial loads. Also, some problems, mainly related with cavitation and stress concentration in the blades, often arise. Therefore, it is necessary to further investigate the mechanical behavior of Deriaz turbines, especially at partial loads.

### DESCRIPTION OF THE INVENTION

The main objective is to increase the energy storage capacity of a PHS facility up to located in reservoirs with limited pumping infrastructure allowing to increase the renewable energy share in the energy mix. To that end, the invention is referred to a system comprising new electro-mechanical strategies for an optimised Deriaz turbine hybridised with a battery system.

These innovations will enable pumping mode increasing the head range of the current units, which is a key feature to overcome the high intermittency of other renewable energies existing in the grid, thus improving flexibility and operational performance of the PHS facility to enable the energy storage aimed by the project.

This solution is designed to retrofit the current existing equipment in the PHS facility, which reflect the most common scenarios in the PHS sector. In addition, these technologies do not need large civil works for their implementation, avoiding costly invasive actuations, which is a significant advance and a huge competitive advantage.

Other objectives of the present invention are:
- To reduce the GHG emissions caused by the electricity generation, by increasing the storage capacity of hydropower plants.
- To improve the operation in pumping mode in a more flexible way, increasing the energy storage capacity of the hydroelectric power facility, by deploying a new electro-mechanical strategies to optimize the Deriaz turbine.
- To consolidate the Deriaz turbine as technology for PHS plants, profiting its better features in pumping mode, by implementing new electro-mechanical strategies enabling power regulation during pump operation supported by a battery system.
- To scale up the solutions in short-medium term by retrofitting existing PHS plants with similar issues related to the impossibility to profit the whole capacity storage of their locations.
- To help to decrease the cost of the pumped-hydro storage in order to facilitate its take-up in the sector expanding its environmental impacts.
- To offer a new alternative for existing hydropower plants to increase its storage capacity and effectiveness allowing to extend its lifetime and fostering the technology growth to meet the required capacity in the future scenarios.

The invention provides new electro-mechanical strategies along with an optimized Deriaz turbine hybridized with a battery system. The Deriaz turbines need to be adapted to be used as energy storage and improve their flexibility. The installation of a battery system, accompanied by a new strategy to control it, would allow rapid variations of the power injected into the grid by the plant and the implementation of the power regulation mode with the plant operating in pumping mode. This will improve the capacity of adapting the runner blades in pumping mode making possible to profit the storage capacity of the PHS.

Thus, the invention relates to a system for producing and storing hydroelectric power which comprises
- one or more turbine units, being a Deriaz turbines, configured to be used in a turbine mode and a pump mode;
- a set of batteries connected to the turbine units,
- a control unit connected to the set of batteries and the turbine units configured to start and to fine tune the turbine units by means of the set of batteries.

The system can also comprise a monitoring unit for analyzing the effect that the operation as pump has in the turbine lifetime.

A static frequency converter, preferably of the VSI (Voltage source inverter) type, could be included and configured to function as a starter in pump mode for the turbine units and as a battery charger for the batteries.

The frequency converter can be a dual unit allowing the independent operation to perform power regulation through the management of the charge-discharge of the battery for one turbine unit and starting in pump mode as a frequency converter for another of the turbine units.

The system can further comprise a pre-charging system that allows the batteries, to set frequency converter's internal capacitors to be at nominal voltage before starting the frequency converter.

Input filters can also be placed before the set of batteries for the reduction of harmonics.

Also, a battery status control unit could be included, connected to the set of batteries.

The invention also relates to a method for producing and storing hydroelectric power using the system described before, and comprising the steps of:
- setting one or more turbine units at a pump or turbine mode,
- regulating power by means of the battery, in a lower amplitude set power band, fine regulation, and
- regulating power in a wide power set power band by varying the power of the turbine units.

In this method, the turbine units could be started in pump mode from the frequency converter with the power supplied from the grid, without battery support, or with the battery power input without grid support.

The frequency converter can also be used to minimize the braking time of the turbine units, both in generator mode and in motor mode, and at the same time it acts as a regenerative brake for battery charging.

The invention is also related to a computer program adapted to perform the steps of the method and a computer readable storage medium comprising the computer program.

### DESCRIPTION OF THE DRAWINGS

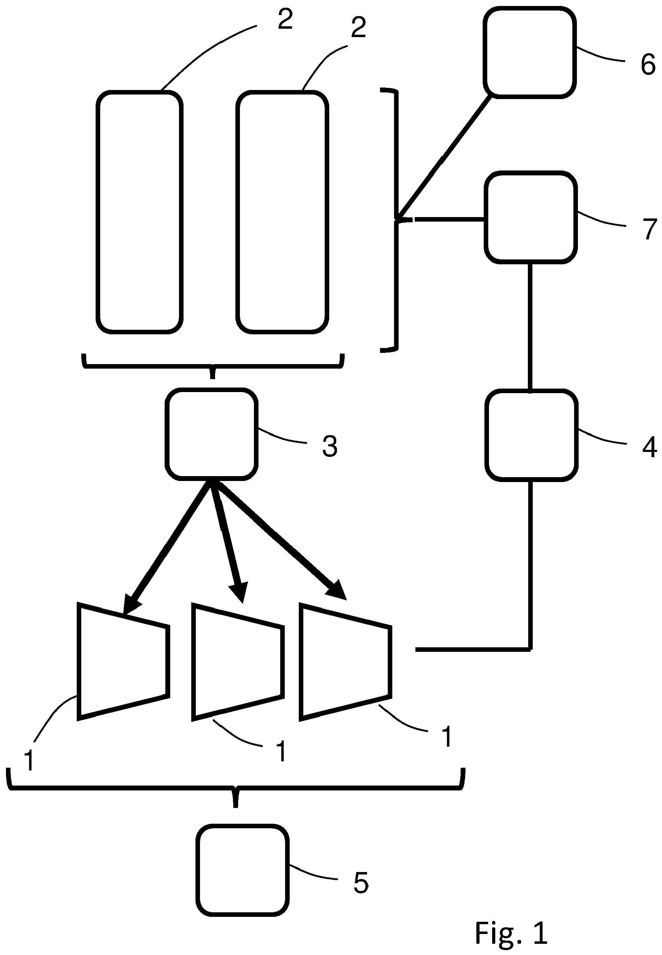

**Fig. 1****.** shows a schematic view of a preferred embodiment of the system of the invention.

### PREFERRED EMBODIMENTS OF THE INVENTION

One objective of the invention is to allow for the very first time Deriaz turbines to vary their power in pump mode. Therefore, as there is no experience in power regulation in Deriaz turbines during pump mode, there is a high risk of important wear in the runner. In order to mitigate this risk, it is proposed the installation of a battery system to support the units for power regulation during pump mode.

Figure 1, shows a preferred embodiment of the system of the invention, which comprises a set of units (1) to produce hydroelectric energy, in this particular case three Deriaz turbines (1), which can be used in a turbine or pump mode. Also, a set of batteries (2), of about 15 MW/30 minutes, are installed in parallel with the units (1) of the system. This batteries (2) can be connected in parallel with any of the units (1), with the objective of allowing rapid variations of the power injected into the grid by the system.

Therefore a combined power regulation mode is obtained, where the battery (2) assumes quick power variations that are further compensated by the pump (1), with slower power change capacity.

The objective of the combined power regulation is to limit the possible wear induced in the turbine (1) by constant power variations in power regulation mode. Most of these variations will be assumed by the batteries (2), limiting the power variations of the turbine (1) to a few corrections to balance the battery level of consumption.

The batteries (2) will also be used as a soft starter for the pumps. For this purpose, the control of the grid side of the battery, used for the combined power regulation mode, and the generator side of the battery, used as a soft starter for the units, are decoupled.

The system also comprises a control unit (3) to control the power consumed/supplied by the battery (2) and the turbine (1). This system will also control the start-up of the units (1) in pump mode.

The system could also comprise a monitoring unit (5) that will allow an analysis of the effect that the operation as pump has in the turbine (1) lifetime. This system will link the wear in the turbine (1) with different control strategies for the turbine/batteries.

The system is configured to perform a set of instructions such that the impeller corrections will be limited only to higher power settings, with a much lower frequency, thus optimizing the operation of the turbines (1).

In a particular embodiment of the invention, the system comprises three Deriaz turbines (1), upholding current generators of a power plant facility. Additionally, the system comprises a set of batteries (2) to allow rapid variations of the power injected into the grid by the plant. This will allow to restore the pumping capacity and to adapt the hydroelectric power station within its full useful capacity.

The invention implements for the first time the set Deriaz turbine-battery in order to restore the pump operation and to adapt the hydroelectric power station within its full useful capacity enabling to increase the energy reservoir, the storage capacity, of the plant and its water head.

The invention, thus allows increasing the pump-turbine stability during transition between operating modes and at part loads in pumping mode, shortening start-up and transition times.

The new Deriaz turbine design particularly focusing on the cavitation behavior to overcome the problems related with the general need of lower submergence in pumping mode allows to improve the stability and reduce the erosion of the impeller.

The invention described could be used to upgrade existing hydropower plants into PHS without large civil works in order to minimize the resources and permits needed, while avoiding any environmental or social impact.

These innovations will enable pumping mode increasing the height range of the current units, which is a key feature to overcome the high intermittency of other renewable energies existing in the grid, thus improving flexibility and operational performance of the PHS to accommodate the high intermittency of hydro power.

Additionally, the whole 13.8 kV of the system will be re-designed to allow performing back-to-back starting of the three turbine units. The control strategy incorporates a set of batteries (2) to allow rapid variations of the power injected into the grid by the plant. This will allow to restore the pumping capacity and to adapt the hydroelectric power station within its full useful capacity.

The system of the invention has a hybridized operation of Deriaz turbines (1) with set of batteries (2). The coordinated operation of the batteries (2) and the turbine units (1) allows to take advantage a hybrid system. Thus, batteries (2) can vary their active power extremely quickly (-500 ms) when connected to the grid through electronic power converters. These batteries (2) typically have an energy storage capacity equivalent to a few hours running at full power. Nevertheless, they degrade very quickly when subjected to frequent load-discharge cycles.

On the other hand, hydraulic groups, in this case turbine units (1), require a longer time to vary their active power, due to the inertia of the water and the operating limits of the mechanical devices that regulate their power, and sometimes to the limitations in pressure oscillations that hydraulic lines can bear. However, they have a high power regulation capacity, as their installed power is normally much higher than that of batteries (2), and they also have an enormous capacity to store energy in their reservoirs. Also, it is considered that the wear of the hydraulic groups as a consequence of an operation with frequent power variations is significant.

For all these reasons, it is proposed to operate the proposed hybrid system in such a way that the batteries (2) collaborate in reducing the regulation effort of the turbine units (1), thus allowing them to function at higher performance operating points. On the other hand, the hydraulic groups will help to control the state of charge (SOC) of the batteries.

The system can also comprise a static frequency converter (4) that will function as a starter in pump mode for any of the 3 turbine units (1) and additionally serve as a battery charger for the batteries (2).

The set of batteries (2) has the objective of making it possible to regulate the power of the turbine units connected to the grid, both in generator mode and in pump mode, minimizing the action on the distributor and/or impeller of the turbine-pump of the 3 turbine units (3). Implement regenerative electrical braking of the machines that allows the batteries to be charged. Starting in pump mode with variable speed using the energy stored in the set of batteries.

The system comprises the static frequency converter (4), acting as a battery charger unit, and also as a static starter by frequency variation for each of the 3 turbine units (1), with a maximum power of 15 MVA. This system is considered as a dual unit that will allow the independent operation of each of its two functional units, so that one of them can be performing the power regulation through the management of the charge-discharge of the battery (2) and the another part of the system starting in pump mode as a frequency converter for another of the turbine units (1). This frequency converter (4) will consist of several stages in parallel to achieve the required nominal power of 15 MW.

The system also comprises the possibility of carrying out back-to-back starts with any combination of the 3 turbine units (1).

The set of batteries could, in a particular case, also comprise:
- A power conversion system, PCS.
- A medium voltage and low voltage switchgear for all batteries.
- A battery charge management system, BMS.
- An energy management system for the battery set, EMS.
- Lithium-ion battery with a lithium iron phosphate cathode (LFP) of 7.5 MWh capacity.

The system could also comprise input filters to the starter/batteries for the reduction of harmonics, and a rectifier.

Also, it could be included a battery status control unit (6).

To maintain the functionality of starting back-to-back and adding the pumping mode, a frequency converter (4) with battery charger capacity is included.

Thus, in a generator mode in generator mode, the turbine units (1) will rotate in the turbine direction.

The 3 turbine units (1) will be able to function as a generator, also adding the possibility of power regulation from the battery (2), without the need for the hydraulic elements of the turbine to actuate to carry out this power regulation. In this case, the generator would be kept at constant power, with no power variation in a wide power set point band and the regulation in a lower amplitude set power band, fine regulation, would be carried out from the battery (2).

In this way, as has been indicated, the hydraulic machine would reduce the action on its mechanical regulation elements, reducing its wear and therefore reducing your need for maintenance. To carry out this power regulation in generator mode, only the battery charger module and the battery itself will intervene. In this way, the battery can be charged or discharged to regulate power in the range of ± 15 MW.

In this way, a rapid power regulation is also offered to the electrical system, since the battery (2) will be in charge of making rapid modifications of generated or consumed power, while the hydraulic machine (1) will vary its power in longer periods of time.

In motor mode, the units (1) will rotate in the pump direction. The units (1) can also operate in pump mode connected to the grid, regulating power from the converter-charger (4) on the grid side. In this case, in the same way as in generator mode, the motor would be maintained with constant power in a wide power setpoint band and the regulation in a lower amplitude power setpoint band, fine regulation, would be carried out from the battery (2), consuming or supplying power in such a way that the power corrections of the pump are minimal and this can participate in the regulation of the secondary market of the electrical system.

In addition, the grid-side converter can supply or consume reactive power from the grid, depending on an external setpoint and thus compensate the power factor, with the group stopped and without consuming active power.

Also, the turbine units (1) could be able to start in pump mode from the frequency converter (4), this converter-charger (4) module functioning as a static starter with the capacity to consume up to 15 MW during this starting process. It is estimated that the power absorbed during start-up in pump mode can reach 14.5 MVA with a duration of less than 90 seconds.

In this mode, the inverter will receive an external start command and will gradually increase the frequency and the supply voltage to the pump unit in order to apply the necessary torque on the machine side (within the mechanical and thermal limits of the pump) until it reaches at its rated speed.

Inverter power for this operating mode could come from the turbine units (1) or from the battery itself (2), in this case the regulating capacity of the machine side converter will be limited to the energy accumulated in the battery (2).

In other words, this starting in pump mode from the frequency converter (4) can be carried out exclusively with the power supplied from the grid, without battery support, or with the battery power input without grid support. Both forms of operation are selectable depending on the availability of the batteries and their state of charge.

The starter/batteries connected on the machine side can also be used to minimize the braking time of the turbine units, both in generator mode and in motor mode, and at the same time it will function as a regenerative brake for battery charging.

It may be the case that one of the turbine units (1) is starting in pump mode from the frequency converter (4) on the machine side and another unit (1) is operating in generator and/or motor mode, regulating power with the battery (2) through the charger converter (4) module on the grid side. In any case, the possible simultaneous operation of the 2 converter-charger modules are limited by the capacity of the batteries (2) and the nominal power of the equipment involved.

As explained, the starter-charger (4) is made up of two independent functional units, in the grid side as battery charger and in the machine side as frequency converter, in case of failure of one of the converter-charger units, it can be safely isolated by means of cutting elements.

The static frequency converter (4) serves also as a starter for the 3 turbine units (1) of the system, being of the VSI (Voltage source inverter) type. It can also be included a sinusoidal filter at the input of the grid side charger and at the output of the machine side converter, in order to prevent the distortion of the voltage wave from damaging the insulation of the generators and group transformers.

The converter will be equipped with a pre-charging system (7) that allows the battery, (2) to set the converter's internal capacitors to be at nominal voltage before starting the frequency converter (4).

In an exemplary embodiment, the objective could be substituting existing turbines in an hydroelectric power station by new Deriaz turbines (1), while upholding the current generators, also allowing performing back-to-back starting of the units (1). The control strategy will incorporate a battery system (2), to allow rapid variations of the power injected into the grid by the system.

New mechanical design for the Deriaz impeller for solving the cavitation problems that arise in Deriaz turbines (1) during pump operation mode. Therefore, it will be improved the original mechanical design, in order to optimize stress distribution in the blades, thus avoiding crack development in stress concentration areas.

## Claims

1. A system for producing and storing hydroelectric power comprising:
- one or more turbine units (1), being a Deriaz turbines, configured to be used in a turbine mode and a pump mode;
- a set of batteries (2) connected to the turbine units (1),
- a control unit (3) connected to the set of batteries (2) and the turbine units (1) configured to start and to fine tune the turbine units (1) by means of the set of batteries (2).

2. The system according to claim 1, further comprising a monitoring unit (5) for analyzing the effect that the operation as pump has in the turbine lifetime.

3. The system according to claim 1, further comprising a static frequency converter (4) configured to function as a starter in pump mode for the turbine units and as a battery charger for the batteries.

4. The system according to claim 3, wherein the frequency converter (4) is a dual unit allowing the independent operation to perform power regulation through the management of the charge-discharge of the batteries (2) for one turbine unit (1) and starting in pump mode as a frequency converter (4) for another of the turbine units (1).

5. The system according to claim 3, wherein the static frequency converter (4) is of the VSI (Voltage source inverter) type.

6. The system according to claim 3, further comprising a pre-charging system (7) that allows the batteries (2), to set frequency converter's (4) internal capacitors to be at nominal voltage before starting the frequency converter (4).

7. The system according to claim 1, further comprising input filters placed before the set of batteries for the reduction of harmonics.

8. The system according to claim 1, further comprising a battery status control unit (6) connected to the set of batteries.

9. A method for producing and storing hydroelectric power using the system of any of claims 1 to 8, and comprising the steps of:
- setting one or more turbine units (1) at a pump or turbine mode,
- regulating power by means of the batteries (2), in a lower amplitude set power band, fine regulation, and
- regulating power in a wide power set power band by varying the flow of the turbine units (1).

10. The method according to claim 9, wherein the turbine units (1) are started in pump mode from the frequency converter (4) with the power supplied from the grid, without batteries (2) support, or with the batteries (2) power input without grid support.

11. The method according to claim 9, wherein the frequency converter (4) is used to minimize the braking time of the turbine units (1), both in generator mode and in motor mode, and at the same time it acts as a regenerative brake for battery (2) charging.

12. A computer program adapted to perform the steps of the method of any of claims 9 to 11.

13. A computer readable storage medium comprising the computer program of claim 12.
